# EUROPEAN PATENT SPECIFICATION

(11) **EP 4 464 600 B1**
(45) Date of publication and mention of the grant of the patent: **27.05.2026**
(21) Application number: 24165094.4
(22) Date of filing: 21.03.2024
(51) Int. Cl.: B64D 13/06

(54) **AIRFLOW MIX MANIFOLD**
LUFTSTROMMISCHVERTEILER
COLLECTEUR DE MÉLANGE À ÉCOULEMENT D'AIR

(30) Priority: 15.05.2023 US 202318317456
(43) Date of publication of application: 20.11.2024
(73) Proprietor: The Boeing Company, Arlington, VA 22202 (US)
(72) Inventor: JONES, Nicholas Alexander, Arlington 22202 (US)
(74) Representative: Boult Wade Tennant LLP

(56) References cited:
- EP-B1- 0 808 273
- US-A- 4 517 813
- US-A- 4 942 739
- US-A1- 2022 177 142

## Description

### FIELD OF THE DISCLOSURE

The present disclosure generally relates to devices for conditioning air in a climate-controlled space, such as onboard an aircraft.

### BACKGROUND OF THE DISCLOSURE

Aircraft typically include an environmental control system for regulating various airflows within the aircraft. More specifically, the environmental control system often is responsible for controlling temperature within a cabin of the aircraft and does so, at least in part, by mixing warm, cabin-drawn air with cool, conditioned air received from an air conditioning pack, and cycling the resulting air mixture back to the cabin. The environmental control system may include an airflow mix manifold in which the warm, cabin-drawn air is mixed with the cool, conditioned air via induced spin and turbulence. The spinning airflow may cause moisture from the air to coalesce on interior walls of the manifold. The airflow mix manifold may include a vertically-oriented scupper channel and/or blade to collect the moisture along the interior walls.

US4942739, in accordance with its abstract, states a mixing chamber for an air-conditioning system including a cylindrical vessel having a plurality of inlet ports provided at an axial end portion for introducing cool air from an air-conditioning unit and warm air from passenger compartments. The vessel is further provided at the other axial end portion with outlet ports. The inlet and outlet ports are oriented in a tangential direction with respect to the vessel to thereby form a spiral air flow in the vessel. The vessel has a water capturing ring located along the inner wall surface of the vessel to prevent film of water on the inner wall surface of the vessel from flowing toward the outlet ports. A water drawing slit is formed in the vessel to open to the inner wall surface at a side of the water capturing ring adjacent to the inlet ports to discharge the water accumulated at this side of the ring.

US4517813, in accordance with its abstract, states an aircraft cabin air conditioning system with an air mixing/water separation manifold providing accelerated mixing and attendant removal of water droplets, ice and snow so as to save fuel and to reduce maintenance requirements through lowering the temperature and reducing the supply rate of fresh input ventilation/pressurization air with make-ups of ventilation air requirements met by recirculation of cabin air through the manifold where such mixing and water removal occurs.

Known mix manifolds may have inefficient airflow mixing and moisture separation. The inefficient mixing may require a very large mixing chamber to adequately mix the warm, cabin-drawn air with the cool, conditioned air via only passively-induced spin and turbulence. Furthermore, the inefficient moisture separation may require a significant height (or length) of the mixing chamber to extract sufficient moisture from the air to meet a designated humidity level or range for the outgoing airflow. However, the size and height of the mix manifold may be restricted due to spatial constraints within the aircraft, such that the mixing chamber is smaller and/or shorter than the size required for adequate mixing and moisture extraction. As a result, the outgoing airflow may not be sufficiently mixed, which can result in significant temperature variations in the airflow supplied to the cabin. Another risk is that the outgoing airflow may be excessively humid, which may undesirably condense within the cabin, creating a rain effect. One option is to introduce active mixing devices into the mix manifold to induce additional mixing of the airflows. However, the presence of additional mixing devices may increase cost and complexity, consume limited power resources, add pressure drop, and/or increase noise.

### SUMMARY OF THE DISCLOSURE

A need exists for an airflow mix manifold that provides improved airflow mixing efficiency and moisture extraction relative to known mix manifolds. With that need in mind, there is disclosed an airflow mix manifold that includes a can and a tower extending from the can. The can includes an interior sidewall that defines a main mixing chamber. The can defines at least one inlet aperture through the interior sidewall to receive airflow into the main mixing chamber. The can includes a moisture collection gutter that is open to the main mixing chamber and is configured to collect moisture from the airflow that coalesces onto the interior sidewall. The moisture collection gutter extends circumferentially along the can. The tower defines a secondary mixing chamber and includes one or more outlets. The secondary mixing chamber is configured to receive the airflow downstream of the can and to direct the airflow to the one or more outlets. The can and the tower are both cylindrical, and the can has a larger diameter than the tower. The moisture collection gutter is located along a shoulder section of the can that radially projects beyond the tower.

There is described herein a method for conditioning airflow. The method includes mixing a first airflow with a second airflow within a mixing supply branch of an airflow mix manifold to form a mixed airflow. The mixing supply branch is coupled to a can of the airflow mix manifold. The method includes supplying the mixed airflow into a main mixing chamber of the can, and collecting moisture from the mixed airflow that coalesces on an interior sidewall of the can within a moisture collection gutter of the can. The moisture collection gutter extends circumferentially along the can. The method includes directing the mixed airflow downstream of the main mixing chamber and the moisture collection gutter toward one or more outlets of the airflow mix manifold for distribution to one or more climate-controlled spaces. The airflow mix manifold includes a tower that is mounted to the can and defines a secondary mixing chamber, wherein said directing the mixed airflow downstream of the main mixing chamber and the moisture collection gutter comprises directing the mixed airflow through a flow straightener and into the secondary mixing chamber. The tower includes the one or more outlets of the airflow mix manifold. The can and the tower are both cylindrical, and the can has a larger diameter than the tower. The moisture collection gutter is located along a shoulder section of the can that radially projects beyond the tower.

### BRIEF DESCRIPTION OF THE DRAWINGS

These and other features, and advantages of the present disclosure will become better understood when the following detailed description is read with reference to the accompanying drawings in which like numerals represent like parts throughout the drawings, wherein:
Figure 1 is an isometric view illustrating an airflow mix manifold.
Figure 2 illustrates the inside of the airflow mix manifold shown in Figure 1.
Figure 3 illustrates a portion of the airflow mix manifold that includes a can of the airflow mix manifold.
Figure 4 is a cross-sectional view of a moisture collection gutter of the airflow mix manifold.
Figure 5 is an isometric view of a flow interleaver nozzle of the airflow mix manifold.
Figure 6 is an isometric view of a flow straightener of the airflow mix manifold.
Figure 7 is a flow chart of a method for conditioning airflow.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure describe an airflow mix manifold that mixes multiple airflows together for distribution to a climate-controlled space, such as a cabin of a vehicle. The airflow mix manifold also separates and removes entrained moisture from the airflows to control the humidity of the outgoing airflow that is distributed to the climate-controlled space. The airflow mix manifold of the examples described herein has a modified design and arrangement relative to known mix manifolds to enhance air mixing efficiency and moisture extraction. For example, the airflow mix manifold includes a moisture collection gutter or trough that is integrated into a can of the airflow mix manifold. The can defines a main mixing chamber in which at least two different airflows are mixed. The gutter circumferentially extends around the main mixing chamber to collect water that coalesces on the interior sidewall of the main mixing chamber. The gutter may be fluidly connected to at least one drainage port or tube for removing the collected water from the airflow mix manifold. The moisture collection gutter may provide improved moisture collection than known mix manifolds. The airflow mix manifold may include a flow straightener downstream of the gutter for redirecting the direction of airflow as the mixed airflow travels toward one or more outlets of the manifold. The airflow mix manifold may include a tower that defines a secondary mixing chamber downstream of the can and the gutter.

In other examples of the modified design and arrangement, the airflow mix manifold may initiate mixing of different airflows upstream of the main mixing chamber of the can. For example, the airflow mix manifold may introduce two airflows within at least one mixing supply branch that is connected to the can. In some examples, the mixing supply branch includes a flow interleaver nozzle to facilitate mixing of the airflows prior to the airflows entering the can. Optionally, the main mixing chamber of the can may be open or substantially open to allow the air to flow along several revolutions within the main mixing chamber prior to entering the flow straightener and/or the tower. These and other aspects of the design of the airflow mix manifold will be described in more detail herein with reference to the figures.

The airflow mix manifold according to the examples described herein has several benefits. For example, the airflow mix manifold may provide more efficient airflow mixing and water extraction from the air than known mix manifolds. The enhanced water extraction capability reduces the risk of excessive humidity in the outgoing airflow directed to the climate-controlled space. Due to the increased efficiency, the airflow mix manifold has the ability to be more compact than known mix manifolds without sacrificing performance compared to the known mix manifolds. The airflow mix manifold may be smaller than at least some known mix manifolds, which frees up space for other equipment. The airflow mix manifold may be lighter than at least some known mix manifolds, which is particularly beneficial for vehicular applications, such as aircraft applications. The airflow mix manifold may be relatively quiet during operation. For example, the manifold described herein may avoid actively-powered mixing devices, which are known to produce noise and vibration.

The airflow mix manifold may be installed in various applications. In some examples, the airflow mix manifold may be disposed onboard a vehicle. The vehicle may include at least one passenger cabin and an air conditioning system. The vehicle may be an aircraft. Alternatively, the vehicle may be rail vehicle, a bus, an automobile, a truck, a marine vessel, or another type of vehicle. The airflow mix manifold optionally may be used in non-vehicular applications, such as at facilities. Example facilities include housing facilities (e.g., homes, apartment complexes, etc.), business facilities (restaurants, stores, offices, etc.), industrial facilities (factories, plants, etc.), and the like.

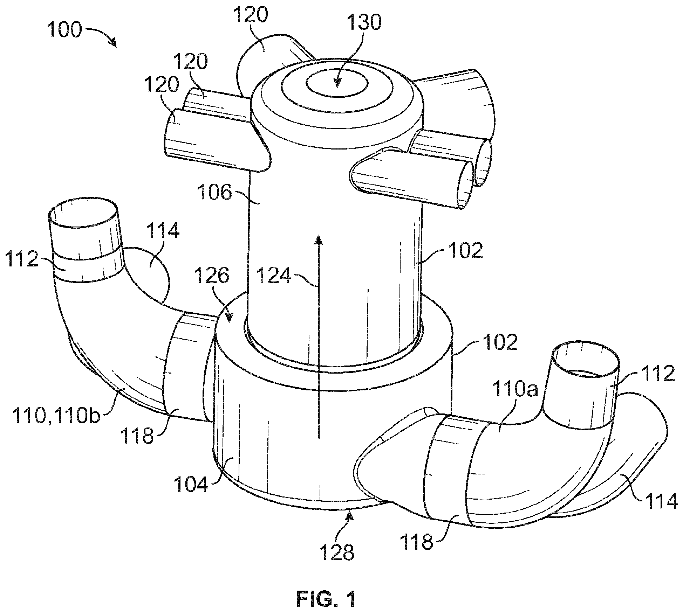

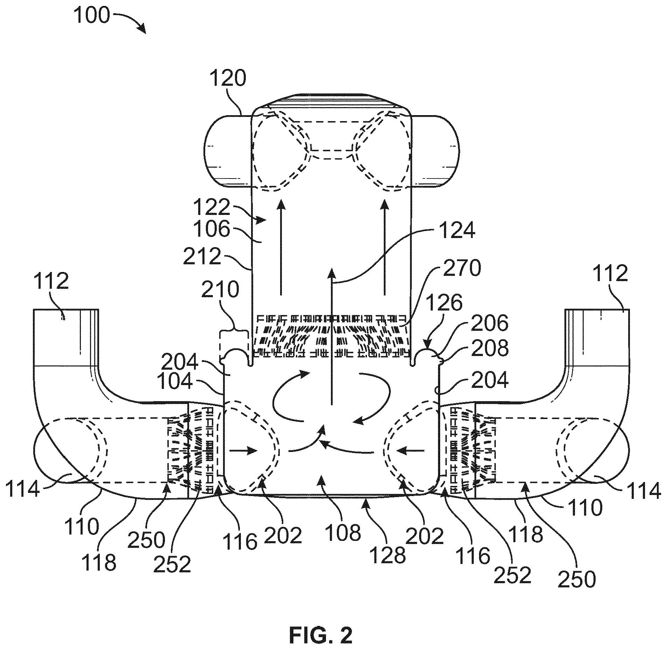

Figure 1 is an isometric view illustrating an airflow mix manifold 100 according to an example. The airflow mix manifold 100 includes a housing 102. The housing 102 may be defined by a first housing body 104, referred to herein as a can 104, and a second housing body 106, referred to herein as a tower 106. The tower 106 is connected to the can 104 and extends from the can 104. The can 104 defines a main mixing chamber 108 (shown in Figure 2).

The airflow mix manifold 100 includes at least one mixing supply branch 110 mounted to the can 104. The airflow mix manifold 100 has two mixing supply branches 110a, 110b in some examples including the illustrated example. Each mixing supply branch 110 receives at least two different airflows and provides initial mixing of the different airflows prior to the airflows entering the can 104. For example, each of the mixing supply branches 110a, 110b includes a first intake conduit 112 and a second intake conduit 114. The two intake conduits 112, 114 converge and are fluidly connected to a respective branch mixing chamber 116 (shown in Figure 2) defined within a merged segment 118 of the mixing supply branch 110. The first intake conduits 112 may supply a first airflow to the branch mixing chambers 116. The second intake conduits 114 may supply a second airflow to the branch mixing chambers 116. The first airflow may mix with the second airflow within the branch mixing chambers 116 to define respective mixed airflows. The mixed airflows in the mixing supply branches 110 may be referred to as partially mixed airflows. The partially mixed airflows enter the main mixing chamber 108 of the can 104. Within the main mixing chamber 108, the partially mixed airflows continue to mix as the airflows circumferentially circulate the main mixing chamber 108.

The airflows refer to moving quantities of air, such as streams. In some examples, the first airflow may be air drawn from a climate-controlled space. The air drawn from the climate-controlled space may be referred to as recirculated air. The climate-controlled space may be a room or cabin. In some examples, the climate controlled-space may be a cabin of a vehicle, such as an aircraft. The second airflow may be air from an air conditioning system. The air conditioning system may be an air conditioning pack, an air cycle machine, and/or the like. The air conditioning system may actively cool the second airflow, such as via a reversible isothermal gas expansion process.

The airflow mix manifold 100 includes one or more outlets 120 along the tower 106. The tower 106 defines a secondary mixing chamber 122 (shown in Figure 2). The airflow that exits the main mixing chamber 108 of the can 104 is mixed or substantially mixed, and is referred to as mixed airflow. The mixed airflow from the main mixing chamber 108 enters the secondary mixing chamber 122 within the tower 106. The mixed airflow may experience additional mixing within secondary mixing chamber 122. The mixed airflow exits the airflow mix manifold 100 through the one or more outlets 120. The airflow mix manifold 100 has multiple outlets 120 in some examples including the illustrated example. The outlets 120 may couple to respective conduits (e.g., ducts, tubes, hoses, etc.) that extend to different spaces or areas within the vehicle or building, to deliver the conditioned airflow to the different spaces or areas. The mixed airflow that exits through the outlets 120 is referred to herein as outgoing airflow. In some examples, the outgoing airflow may be cool, conditioned air that is directed to a cabin of an aircraft.

The airflow traverses through the housing 102 of the airflow mix manifold 100 in a downstream direction 124. In some examples, the housing 102 is vertically oriented. The tower 106 may be above the can 104 such that the tower 106 extends beyond a top end 126 of the can 104. In this orientation, the downstream direction 124 is vertically upward. The mixing supply branches are located at or proximate to a bottom end 128 of the housing 102, and the outlets 120 are located at or proximate to a top end 130 of the housing 102. Optionally, the airflow mix manifold 100 may have a different orientation. For example, the airflow mix manifold 100 may be rotated to have a horizontally-oriented housing 102. The orientation of the airflow mix manifold 100 may be dictated by available space in the vehicle or building in which it is installed, the location of existing conduits for connecting to the mixing supply branches and/or the outlets 120, and/or the like.

Figure 2 illustrates the inside of the airflow mix manifold 100 shown in Figure 1. Figure 2 is a generally cross-sectional view of the airflow mix manifold 100. The mixing supply branches 110 are mounted to the can 104 along a lower region of the can 104 proximate to the bottom end 128. The mixing supply branches 110 supply the partially mixed airflows into the main mixing chamber 108 via corresponding inlet apertures 202. In some examples, the main mixing chamber 108 is cylindrical. The mixing supply branches 110 may be arranged and positioned to aim the mixing airflows in directions that encourage circumferential circulation of the airflows within the main mixing chamber 108. The airflows may essentially spin around an interior sidewall 204 of the can 104 that defines an outer radial boundary of the main mixing chamber 108. For example, the inlet apertures 202 may be spaced apart along the circumference of the can 104, and the mixing supply branches 110 may be oriented to direct the partially mixed airflows in tangential or substantially tangential directions to the circumference. In some examples, the mixing supply branches 110 may aim the partially mixed airflows in complementary directions to encourage circumferential circulation of the airflow in a common rotational direction (e.g., clockwise or counterclockwise). In the illustrated orientation shown in Figures 1 and 2, the first mixing supply branch 110a may direct a first partially mixed airflow into a front inlet aperture 202 in a leftward direction, and the second mixing supply branch 110b directs a second partially mixed airflow into a back inlet aperture 202 in a rightward direction. The effect is clockwise circulation of the airflow when viewed from above the can 104. The circumferential circulation exerts centrifugal force on separated moisture, forcing the moisture onto the interior sidewall 204. Optionally, the mixing supply branches 110 may direct the partially mixed airflows to circulate in the counterclockwise direction. In some alternative examples, the mixing supply branches 110 may direct the partially mixed airflows in different, conflicting directions relative to one another. One potential drawback of these alternative examples is that less water may coalesce on the interior sidewall 204 due to a reduction in centrifugal force, which may result in less overall water extraction.

The airflow mix manifold 100 may include a moisture collection gutter 206 that is integrated into the can 104. The moisture collection gutter 206, also referred to herein as gutter 206, is designed to collect liquid water (e.g., moisture) that coalesces on the interior sidewall 204. The gutter 206 is open to the main mixing chamber 108 and is connected to the interior sidewall 204. The gutter 206 may be located at or proximate to a downstream end of the main mixing chamber 108. For example, positioning the gutter 206 at a downstream portion of the main mixing chamber 108 may ensure that the gutter 206 collects a majority or substantial majority (e.g., over 90%) of the water that coalesces on the interior sidewall 204. The can 104 may be designed such that all of the water that coalesces on the interior sidewall 204 can be received into the gutter 206. In the illustrated vertical orientation, the downstream end of the main mixing chamber 108 is the top end 126 of the can 104. The gutter 206 may be located at the top end 126 of the can 104.

The gutter 206 may have a convex curvature that bulges away from the main mixing chamber 108. In some examples including the illustrated example, the gutter 206 bulges in the downstream direction 124. As described herein in more detail, the curvature of the gutter 206 traps liquid water that moves along the interior sidewall 204 in the downstream direction 124. For example, the circumferential circulation of the mixed airflow within the main mixing chamber 108 may force the liquid water to the interior sidewall 204 via centrifugal force. The downstream flow of the mixed airflow (e.g., due to pressure gradients) forces the liquid water that is on the interior sidewall 204 to migrate downstream until the water enters the gutter 206. The gutter 206 may direct the water into a scupper trough 208 for draining the water from the airflow mix manifold 100.

In the claimed airflow mix manifold, the can 104 and the tower 106 are both cylindrical, and they may be coaxial. The can 104 has a greater diameter than the tower 106, such that the can 104 has a shoulder section 210 that radially projects beyond the tower 106. For example, the shoulder section 210 may extend from an interior sidewall 212 of the tower 106 to the interior sidewall 204 of the can 104. The gutter 206 is located along the shoulder section 210 of the can 104. For example, the gutter 206 may extend radially inward or substantially radially inward from the interior sidewall 204 of the can 104 toward the interior sidewall 212 of the tower 106.

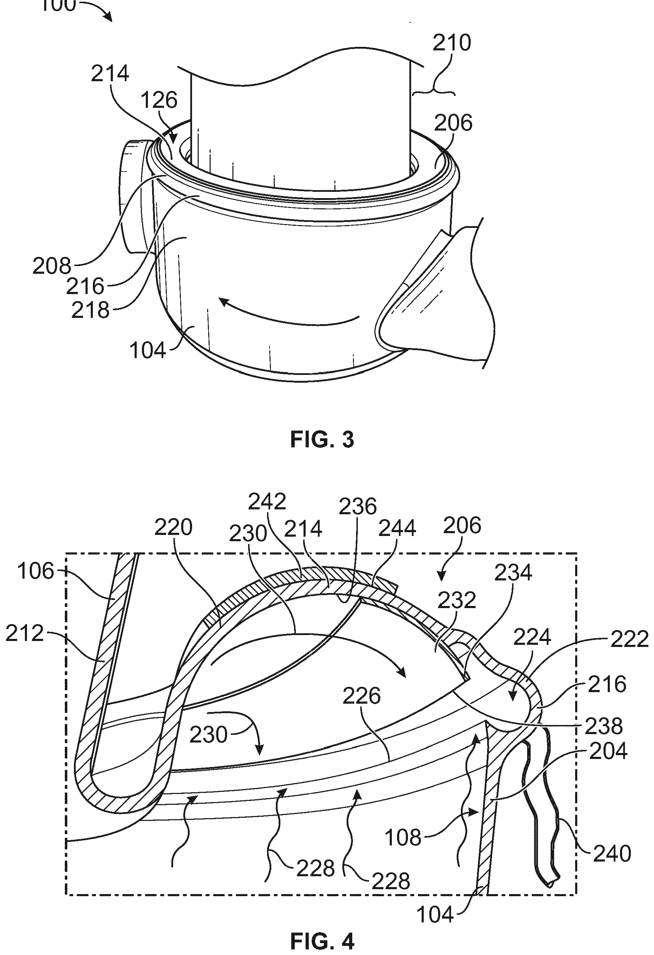

Figure 3 illustrates a portion of the airflow mix manifold 100 that includes the can 104. In some examples, the gutter 206 annularly extends along the entire circumference of the can 104. For example, the gutter 206 may include an annular bulge 214 at the top end 126 of the can 104 along the shoulder section 210. The gutter 206 curvature may resemble a crown. The gutter 206 may bulge in the axial downstream direction or in a substantially axial downstream direction. Optionally, the scupper trough 208 may bulge outward in the radial direction. For example, the scupper trough 208 may include a ridge 216 or lip that is between an outer surface 218 of the can 104 and the annular bulge 214 of the gutter 206. In some alternative examples, the gutter 206 may bulge radially outward in addition to, or instead of, bulging axially in the downstream direction.

Figure 4 is a cross-sectional view of the moisture collection gutter 206 according to an example. The gutter 206 of the can 104 may include a gutter wall 220 and a scupper trough 222. The gutter wall 220 may extend along a curved path from the interior sidewall 212 of the tower 106. The gutter wall 220 may provide the convex annular bulge 214 shown in Figure 3. The gutter wall 220 may define an arched ceiling of the main mixing chamber 108. The scupper trough 222 may be connected to the gutter wall 220. For example, the scupper trough 222 may be a bump-out that is integrally connected to a radial outer end of the gutter wall 220. The scupper trough 222 defines the ridge 216 shown in Figure 3. The scupper trough 222 defines an annular channel 224 that is fluidly open to the main mixing chamber 108. The annular channel 224 may be a slot or groove that is located between the gutter wall 220 and the interior sidewall 204. The annular channel 224 may be recessed relative to the interior sidewall 204, such that moisture that migrates along the interior sidewall 204 falls into the annular channel 224 upon moving past a lip 226 of the interior sidewall 204.

During operation, moisture can travel in two main paths into the annular channel 224 of the scupper trough 222. For example, a primary travel path, as indicated by arrows 228, is along the interior sidewall 204. Forces from the spinning mixed airflow may push moisture that coalesces on the interior sidewall 204 to migrate upward (e.g., in the downstream direction) until the moisture drips from the lip 226 into the annular channel 224. A secondary travel path, as indicated by arrows 230, is radially outward along the curved gutter wall 220. In some examples, the gutter 206 may include a scupper blade 232 that defines a flange 234 extending toward the annular channel 224. The scupper blade 232 in some examples, including the illustrated example, is a discrete element that is mounted to an inner surface 236 of the gutter wall 220. A first section of the scupper blade 232 may be bonded to the gutter wall 220, and a second section of the scupper blade 232 may project from the gutter wall 220 to define the flange 234. The moisture that travels along the secondary travel path may migrate from the inner surface 236 of the gutter wall 220 onto the scupper blade 232 along the first section. The moisture may then move, due to the forces exerted by the spinning mixed airflow, onto the flange 234, and may drip from an edge 238 of the flange 234 into the annular channel 224. In some alternative examples, the scupper blade 232 may be an integral portion of the gutter wall 220. For example, the gutter wall 220 may be molded or otherwise formed to include a cantilevered flange strip that represents the flange 234 shown in Figure 4. In other alternative examples, the gutter 206 may not have the scupper blade 232. For example, the moisture that travels along the secondary travel path may drip into the annular channel 224 directly from the inner surface 236 of the gutter wall 220 (without moving along a cantilevered flange).

As shown and described with reference to Figure 4, the gutter 206 is designed to capture and trap moisture that coalesces on interior surfaces of the main mixing chamber 108. The collected moisture can be removed from the annular channel 224 such that the mixed airflow that moves downstream through the tower 106 and out through the outlet(s) 120 has a lower moisture content (e.g., humidity). The airflow mix manifold 100 described herein may efficiently and effectively extract water from the airflows. In some examples, the scupper trough 222 may include one or more drainage ports for discharging the collected water from the airflow mix manifold 100. Figure 4 shows a drain tube 240 that is mounted to the scupper trough 222 outside of the main mixing chamber 108. The drain tube 240 may be fluidly connected to a drainage port to receive water from the annular channel 224 and direct the water away from the airflow mix manifold 100. Optionally, the airflow mix manifold 100 may have multiple drain tubes 240 at different locations around the circumference of the can 104. In some alternative examples, the airflow mix manifold 100 may lack drain tubes. For example, the water may simply drip through the open drainage ports of the scupper trough 222 onto an outer surface of the can 104. The water may be collected in a tray under the can 104.

In some examples, the airflow mix manifold 100 may include a heater strip 242 mounted to the gutter 206. The heater strip 242 may be an active heating element that is selectively operated to increase the temperature of the gutter 206. The heater strip 242 may heat the gutter 206 to prohibit liquid water from freezing along the surfaces of the gutter 206, which could obstruct moisture extraction. Furthermore, the heater strip 242 may be actuated to melt ice that is already present along the surfaces of the gutter 206. In some examples, the heater strip 242 may be mounted to the gutter wall 220. The heater strip 242 may be placed on an outer surface 244 of the gutter wall 220 (which faces away from the main mixing chamber 108). The heater strip 242 may include electrically resistive elements that emit heat when an electric current is supplied to the electrically resistive elements. The heater strip 242 may extend annularly along the convex bulge 214 of the gutter 206 for the entirety, or at least a segment, of the circumferential length of the gutter 206. In some alternative examples, the heater strip 242 may be located along the can 104, such as upstream of (e.g., below) the scupper trough 222. Optionally, the heater strip 242 shown in Figure 4 may be a first heater strip, and the airflow mix manifold 100 may include a second heater strip mounted along the can 104 upstream of the scupper trough 222. In other alternative examples, the airflow mix manifold 100 may lack any heater strip. For example, in some applications the airflows may be sufficiently warm that freezing is not a concern.

Referring now back to Figure 2, the airflow mix manifold 100 in an example initiates mixing of different airflows within the at least one mixing supply branch 110 upstream of the main mixing chamber 108 of the can 104. For example, the mixing supply branches 110 may be designed such that a portion of the first intake conduit 112 is disposed within and surrounded by a portion of the second intake conduit 114 along the merged segment 118 of the mixing supply branch 110. As such, the second airflow within the second intake conduit 114 flows around the outside of the first intake conduit 112. The first airflow is emitted from a distal end 250 of the first intake conduit 112 and immediately mixes with the surrounding second airflow within the branch mixing chamber 116.

In some examples, the airflow mix manifold 100 includes a flow interleaver nozzle 252 to facilitate mixing of the airflows prior to the airflows entering the can 104. For example, the flow interleaver nozzle 252 may be mounted to the distal end 250 of the first intake conduit 112 within the merged segment 118. In some examples, each of the mixing supply branches 110 includes a respective flow interleaver nozzle 252. The flow interleaver nozzle 252 is designed to enhance mixing of the first and second airflows within the branch mixing chamber 116.

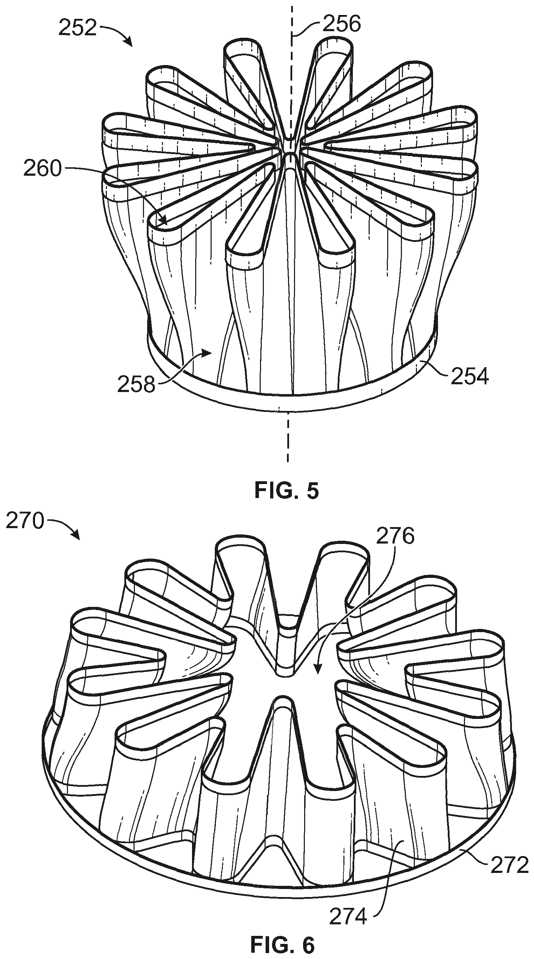

Figure 5 is an isometric view of a flow interleaver nozzle 252 according to an example. The flow interleaver nozzle 252 may represent each of the flow interleaver nozzles 252 shown in Figure 2. The flow interleaver nozzle 252 is a lobed mixer. The flow interleaver nozzle 252 may include a tubular body 254 that is configured to be mounted to the distal end 250 of the first intake conduit 112 and to receive the first airflow from the first intake conduit 112. The tubular body 254 is oriented and extends along an interleaver axis 256. The flow interleaver nozzle 252 may include a plurality of converging airflow guides 258 that extend from the tubular body 254 radially toward the interleaver axis 256, and a plurality of diverging airflow guides 260 that extend from the tubular body 254 radially away from the interleaver axis 256. The converging airflow guides 258 may be azimuthally interleaved with the diverging airflow guides 260. The converging airflow guides 258 and the diverging airflow guides 260 may partition the first and second airflows into a plurality of first airflow streams flowing from the tubular body 254 in the downstream direction and a plurality of second airflow streams flowing from a region external to the tubular body 254 in the downstream direction. The converging airflow guides 258 and the diverging airflow guides 260 collectively may interleave the first airflow streams with the second airflow streams to produce the mixed airflow. The flow interleaver nozzle 252 may have a similar shape as one or more of the airflow interleavers described in U.S. Patent Application Publication No. 2022/0177142.

Referring now back to Figure 2, in an example the flow interleaver nozzles 252 are within the mixing supply branches 110 and not within the main mixing chamber 108. The main mixing chamber 108 may be relatively open and empty. Optionally, the main mixing chamber 108 may be entirely open and empty to avoid obstructing the circulation of the mixed airflow.

In some examples, the airflow mix manifold 100 includes a flow straightener 270 designed to redirect the mixed airflow as the mixed airflow travels downstream toward the one or more outlets 120. The flow straightener 270 may be located downstream of the gutter 206 and/or downstream of the can 104. In some examples, the flow straightener 270 is located within the tower 106, such as at an upstream entrance to the secondary mixing chamber 122. The flow straightener 270 may redirect the mixed airflow from the circumferential circulation within the main mixing chamber 108 to a more axial, downstream flow direction within the secondary mixing chamber 122. The flow straightener 270 may have a diameter that is similar to the diameter of the secondary mixing chamber 122, such that all or most of the mixed airflow is forced to flow through and/or along the flow straightener 270 before reaching the outlets 120.

Figure 6 is an isometric view of the flow straightener 270 according to an example. In some examples, the design of the flow straightener 270 may be similar to the flow interleaver nozzle 252 shown in Figure 5. The flow straightener 270 may be more or substantially more open than the flow interleaver nozzle 252 to avoid obstructing downstream flow. The flow straightener 270 has a tubular body 272 and a plurality of circumferentially-spaced fins 274 or guide structures that extend from the tubular body 272. The fins 274 may partition the swirling mixed airflow into a plurality of mixed airflow streams that move in a common or substantially common direction toward the outlets 120. A central cavity 276 through the flow straightener 270 may be open or substantially open. The central cavity 276 is defined by the fins 274 and the tubular body 272.

Referring now back to Figure 2, in an example the height of the tower 106 from the flow straightener 270 to the outlets 120 is discretionary based on the desired use application and/or user preferences. For example, the airflow mixing and the water extraction mostly occur within the can 104, as described above. The airflow mix manifold 100 described herein does not require an extended secondary mixing chamber 122, so the tower 106 may be relatively short and compact. For example, the tower 106 optionally may be shorter than the illustrated tower 106 in Figure 2. As a result, the airflow mix manifold 100 may occupy less space and may have less weight by reducing the size of the tower 106. This compactness may be particularly valuable in aircraft and other vehicular applications. In a retrofit application, the tower 106 may have a longer length in order for the outlets 120 to align with corresponding conduits in the vehicle or building in which the airflow mix manifold 100 is installed.

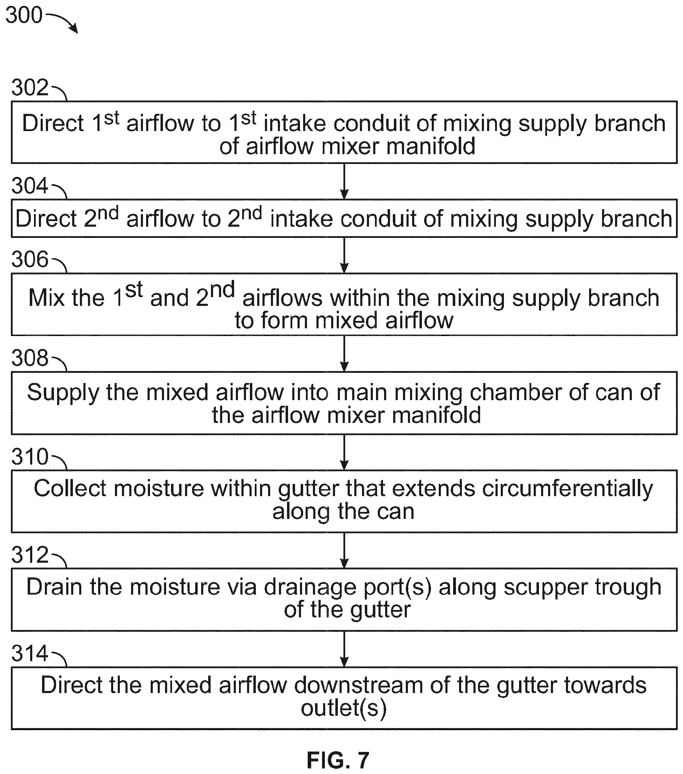

Figure 7 is a flow chart 300 of a method for conditioning airflow according to an example. The method may be performed using the airflow mix manifold 100 according to the examples shown in Figures 1 through 6. The method optionally may include at least one additional step than shown, at least one fewer step than shown, and/or at least one different step than shown in Figure 7.

At step 302, a first airflow is directed from one or more climate-controlled spaces within a vehicle or building to a first intake conduit 112 of a mixing supply branch 110 of an airflow mix manifold 100. The mixing supply branch 110 is coupled to a can 104 of the airflow mix manifold 100. The first airflow may be directed along conduits to the first intake conduit 112 via one or more blowers, pumps, fans, and/or the like. In some examples, the one or more climate-controlled spaces are cabins within an aircraft. For example, the method may include installing the airflow mix manifold 100 within an aircraft. The airflow mix manifold 100 may represent a portion of an environmental control system of the aircraft.

At step 304, a second airflow is directed to a second intake conduit 114 of the mixing supply branch 110. The second airflow may be received from an air conditioning system (e.g., an air conditioning pack, air cycle machine, and/or the like). For example, the second airflow may be cool air, and the first airflow may be recirculated air.

At step 306, the first airflow is mixed with the second airflow within the mixing supply branch 110 to form a mixed airflow. The mixing supply branch 110 may include a merged segment 118 that defines a branch mixing chamber 116. The first airflow may partially mix with the second airflow within the branch mixing chamber 116 prior to entering the can 104.

At step 308, the mixed airflow is supplied from the mixing supply branch 110 into the main mixing chamber 108 of the can 104. The mixing supply branch 110 and optionally additional mixing supply branches 110 may be positioned and oriented to encourage circumferential circulation of the mixed airflow within the main mixing chamber 108, without the use of active mixing elements.

At step 310, moisture from the mixed airflow that coalesces on an interior sidewall 204 of the can 104 is collected within a moisture collection gutter 206 of the can 104. The moisture collection gutter 206 may extend circumferentially along the can 104. Centrifugal force from the circulating mixed airflow may cause the moisture to separate and coalesce on the interior sidewall 204. The gutter 206 may be positioned and orientated to capture the moisture present along the interior sidewall 204 as the moisture migrates in the downstream direction 124.

At step 312, the moisture that is captured by the gutter 206 is drained from the airflow mix manifold 100 via one or more drainage ports of a scupper trough 222 of the gutter 206. The scupper trough 222 defines an annular channel 224 that is recessed relative to the interior sidewall 204 of the can 104 and a gutter wall 220 of the gutter 206, such that the moisture drips into the annular channel 224. The scupper trough 222 may include drainage ports through which the moisture in the annular channel 224 is removed from within the can 104.

At step 314, the mixed airflow is directed downstream of the main mixing chamber 108 and the gutter 206 toward one or more outlets 120 of the airflow mix manifold 100 for distribution to the one or more climate-controlled spaces. The airflow mix manifold 100 may include a tower 106 that is mounted to the can 104 and defines a secondary mixing chamber 122. Directing the mixed airflow downstream of the main mixing chamber 108 and the gutter 206 may include directing the mixed airflow through a flow straightener 270 and into the secondary mixing chamber 122. The tower 106 may include the one or more outlets 120 of the airflow mix manifold 100.

Also useful for understanding the claimed airflow mix manifold, there is described an airflow mix manifold comprising: a can including an interior sidewall that defines a main mixing chamber, wherein the can defines an inlet aperture through the interior sidewall to receive airflow into the main mixing chamber, wherein the can includes a moisture collection gutter that is open to the main mixing chamber and is configured to collect moisture from the airflow that coalesces onto the interior sidewall, and wherein the moisture collection gutter extends circumferentially along the can; and a mixing supply branch coupled to the inlet aperture and configured to supply the airflow into the main mixing chamber, wherein the mixing supply branch includes a first intake conduit that conveys a first airflow stream, a second intake conduit that conveys a second airflow stream, and a merged segment that defines a branch mixing chamber, and wherein the branch mixing chamber is configured to permit the first airflow stream to mix with the second airflow stream to form the airflow prior to the airflow entering the can. The airflow mix manifold may, further comprise a tower extending from the can, wherein the tower defines a secondary mixing chamber and includes one or more outlets, and wherein the secondary mixing chamber is configured to receive the airflow downstream of the can and to direct the airflow to the one or more outlets. The merged segment may include a distal end of the first intake conduit disposed within the branch mixing chamber, wherein the distal end of the first intake conduit is surrounded by a portion of the second intake conduit, and wherein the mixing supply branch includes a flow interleaver nozzle mounted to the distal end of the first intake conduit. The moisture collection gutter may include a scupper trough that defines an annular channel, and the annular channel may be configured to receive the moisture from the airflow and to drain the moisture outside of the can.

While various spatial and direction terms such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to define the parameters of the various examples of the disclosure, the examples are by no means limiting and are exemplary. Many other examples will be apparent to those of skill in the art upon reviewing the above description. The scope of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description enables any person skilled in the art to practice various examples of the disclosure, including making and using any devices or systems and performing any incorporated methods. The patentable scope of the disclosure is defined by the claims, and can include other examples that occur to those skilled in the art.

## Claims

1. An airflow mix manifold (100) comprising:
a can (104) including an interior sidewall (204) that defines a main mixing chamber (108), wherein the can (104) defines at least one inlet aperture (202) through the interior sidewall (204) to receive airflow into the main mixing chamber (108), wherein the can (104) includes a moisture collection gutter (206) that is open to the main mixing chamber (108) and is configured to collect moisture from the airflow that coalesces onto the interior sidewall (204), and wherein the moisture collection gutter (206) extends circumferentially along the can (104); and
a tower (106) extending from the can (104), wherein the tower (106) defines a secondary mixing chamber (122) and includes one or more outlets (120), wherein the secondary mixing chamber (122) is configured to receive the airflow downstream of the can (104) and to direct the airflow to the one or more outlets (120),
wherein the can (104) and the tower (106) are both cylindrical, and the can (104) has a larger diameter than the tower (106), and
wherein the moisture collection gutter (206) is located along a shoulder section (210) of the can (104) that radially projects beyond the tower (106).

2. The airflow mix manifold (100) of claim 1, wherein the moisture collection gutter (206) is located at an end of the can (104) according to a downstream direction (124).

3. The airflow mix manifold (100) of claim 1 or 2, wherein the can (104) is cylindrical and the moisture collection gutter (206) includes a curved gutter wall (220) that defines an annular bulge (214) along the can (104).

4. The airflow mix manifold (100) of any preceding claim, wherein:
the moisture collection gutter (206) includes a scupper trough (222) that defines an annular channel (224), and wherein the annular channel (224) is configured to receive the moisture from the airflow and to drain the moisture outside of the can (104) and the tower (106).

5. The airflow mix manifold (100) of claim 4, wherein the moisture collection gutter (206) includes a or the gutter wall (220) and a scupper blade (232) mounted to the gutter wall (220), wherein the scupper blade (232) defines a flange (234) that extends toward the annular channel (224), and wherein the flange (234) is configured to convey moisture from the airflow that coalesces onto the gutter wall (220) and the scupper blade (232) from an edge (238) of the flange (234) into the annular channel (224).

6. The airflow mix manifold (100) of any preceding claim, further comprising a heater strip (242) mounted to the moisture collection gutter (206), wherein the heater strip (242) is configured to heat the moisture collection gutter (206) to prohibit freezing of the moisture along one or more surfaces of the moisture collection gutter (206).

7. The airflow mix manifold (100) of any preceding claim, further comprising:
at least one mixing supply branch (110) coupled to the at least one inlet aperture (202), and wherein a first mixing supply branch (110a) of the at least one mixing supply branch (110) includes a first intake conduit (112) that conveys a first airflow;
a second intake conduit (114) that conveys a second airflow; and
a merged segment (118) that defines a branch mixing chamber (116); and wherein:
the merged segment (118) includes a distal end (250) of the first intake conduit (112) disposed within the branch mixing chamber (116);
the distal end (250) of the first intake conduit (112) is surrounded by a portion of the second intake conduit (114).

8. The airflow mix manifold (100) of claim 7, wherein the first mixing supply branch (110a) includes a flow interleaver nozzle (252) mounted to the distal end (250) of the first intake conduit (112) within the branch mixing chamber (116), and the flow interleaver nozzle (252) is configured to facilitate mixing of the first airflow and the second airflow prior to the first and second airflows entering the can (104).

9. The airflow mix manifold (100) of claim 7 or claim 8, wherein the airflow mix manifold (100) includes a second mixing supply branch (110b) of the at least one mixing supply branch (110), wherein the first mixing supply branch (110a) is coupled to a first inlet aperture of at least one inlet aperture (202), and the second mixing supply branch (110b) is coupled to a second inlet aperture of the at least one inlet aperture (202), and wherein the first and second inlet apertures are circumferentially spaced apart along the can (104) and the first and second mixing supply branches (110a, 110b) have different orientations relative to the can (104) to cause circumferential circulation of the airflow within the main mixing chamber (108) in a common rotational direction (124).

10. The airflow mix manifold (100) of any preceding claim, further comprising a flow straightener (270) located within the secondary mixing chamber (122) of the tower (106), wherein the flow straightener is configured to redirect the airflow received from the main mixing chamber (108) toward the one or more outlets (120).

11. An aircraft including the airflow mix manifold (100) of any preceding claim.

12. A method for conditioning airflow, the method comprising:
mixing a first airflow with a second airflow within a mixing supply branch (110) of an airflow mix manifold (100) to form a mixed airflow, wherein the mixing supply branch (110) is coupled to a can (104) of the airflow mix manifold (100);
supplying the mixed airflow into a main mixing chamber (108) of the can (104);
collecting moisture from the mixed airflow that coalesces on an interior sidewall (204) of the can (104) within a moisture collection gutter (206) of the can (104), wherein the moisture collection gutter (206) extends circumferentially along the can (104); and
directing the mixed airflow downstream of the main mixing chamber (108) and the moisture collection gutter (206) toward one or more outlets (120) of the airflow mix manifold (100) for distribution to one or more climate-controlled spaces,
wherein the airflow mix manifold (100) includes a tower (106) that is mounted to the can (104) and defines a secondary mixing chamber (122),
wherein said directing the mixed airflow downstream of the main mixing chamber (108) and the moisture collection gutter (206) comprises directing the mixed airflow through a flow straightener (270) and into the secondary mixing chamber (122),
wherein the tower (106) includes the one or more outlets (120) of the airflow mix manifold (100),
wherein the can (104) and the tower (106) are both cylindrical, and the can (104) has a larger diameter than the tower (106), and
wherein the moisture collection gutter (206) is located along a shoulder section (210) of the can (104) that radially projects beyond the tower (106).

13. The method of claim 12, further comprising:
directing the first airflow from the one or more climate-controlled spaces to a first intake conduit (112) of the mixing supply branch (110); and
directing the second airflow from an air conditioning system to a second intake conduit (114) of the mixing supply branch (110).

14. The method of claim 12 or 13, wherein the moisture collection gutter (206) includes a scupper trough (222) that defines an annular channel (224), and the method further comprises draining the moisture from the airflow mix manifold (100) via one or more drainage ports of the scupper trough (222).

15. The method of any of claims 12 to 14, further comprising installing the airflow mix manifold (100) within an aircraft.

## Patentansprüche

1. Luftstrommischverteiler (100), umfassend:
einen Behälter (104), der eine innere Seitenwand (204) einschließt, die eine Hauptmischkammer (108) definiert, wobei der Behälter (104) mindestens eine Einlassöffnung (202) durch die innere Seitenwand (204) definiert, um Luftstrom in die Hauptmischkammer (108) aufzunehmen, wobei der Behälter (104) eine Feuchtigkeitsauffangrinne (206) einschließt, die zur Hauptmischkammer (108) hin offen ist und so konfiguriert ist, dass sie Feuchtigkeit aus dem Luftstrom sammelt, die sich an der inneren Seitenwand (204) ansammelt, und wobei sich die Feuchtigkeitsauffangrinne (206) in Umfangsrichtung entlang des Behälters (104) erstreckt; und
einen Turm (106), der sich von dem Behälter (104) erstreckt, wobei der Turm (106) eine sekundäre Mischkammer (122) definiert und einen oder mehrere Auslässe (120) einschließt, wobei die sekundäre Mischkammer (122) so konfiguriert ist, dass sie den Luftstrom stromabwärts des Behälters (104) aufnimmt und den Luftstrom zu dem einen oder den mehreren Auslässen (120) leitet,
wobei sowohl der Behälter (104) als auch der Turm (106) zylindrisch sind und der Behälter (104) einen größeren Durchmesser aufweist als der Turm (106), und
wobei die Feuchtigkeitsauffangrinne (206) entlang eines Schulterabschnitts (210) des Behälters (104) gelegen ist, der radial über den Turm (106) vorsteht.

2. Luftstrommischverteiler (100) nach Anspruch 1, wobei die Feuchtigkeitsauffangrinne (206) an einem Ende des Behälters (104) gemäß einer stromabwärtigen Richtung (124) gelegen ist.

3. Luftstrommischverteiler (100) nach Anspruch 1 oder 2, wobei der Behälter (104) zylindrisch ist und die Feuchtigkeitsauffangrinne (206) eine gekrümmte Rinnenwand (220) einschließt, die eine ringförmige Ausbuchtung (214) entlang des Behälters (104) definiert.

4. Luftstrommischverteiler (100) nach einem vorstehenden Anspruch, wobei:
die Feuchtigkeitsauffangrinne (206) eine Ablaufrinne (222) einschließt, die einen ringförmigen Kanal (224) definiert, wobei der ringförmige Kanal (224) so konfiguriert ist, dass er die Feuchtigkeit aus dem Luftstrom aufnimmt und die Feuchtigkeit aus dem Behälter (104) und dem Turm (106) nach außen ablässt.

5. Luftstrommischverteiler (100) nach Anspruch 4, wobei die Feuchtigkeitssammelrinne (206) eine oder die Rinnenwand (220) und eine an der Rinnenwand (220) montierte Ablaufschaufel (232) einschließt, wobei die Ablaufschaufel (232) einen Flansch (234) definiert, der sich in Richtung des ringförmigen Kanals (224) erstreckt, und wobei der Flansch (234) so konfiguriert ist, dass er Feuchtigkeit aus dem Luftstrom, der sich an der Rinnenwand (220) und der Ablaufschaufel (232) ansammelt, von einem Rand (238) des Flansches (234) in den ringförmigen Kanal (224) befördert.

6. Luftstrommischverteiler (100) nach einem vorstehenden Anspruch, weiter umfassend einen Heizstreifen (242), der an der Feuchtigkeitsauffangrinne (206) montiert ist, wobei der Heizstreifen (242) so konfiguriert ist, dass er die Feuchtigkeitsauffangrinne (206) erhitzt, um Einfrieren der Feuchtigkeit entlang einer oder mehrerer Oberflächen der Feuchtigkeitsauffangrinne (206) zu verhindern.

7. Luftstrommischverteiler (100) nach einem vorstehenden Anspruch, weiter umfassend:
mindestens einen Mischzuleitungszweig (110), der mit der mindestens einen Einlassöffnung (202) gekoppelt ist, und wobei ein erster Mischzuleitungszweig (110a) des mindestens einen Mischzuleitungszweigs (110) eine erste Einlassleitung (112) einschließt, die einen ersten Luftstrom befördert;
eine zweite Einlassleitung (114), die einen zweiten Luftstrom befördert; und
ein zusammengeführtes Segment (118), das eine Zweigmischkammer (116) definiert; und wobei:
das zusammengeführte Segment (118) ein distales Ende (250) der ersten Einlassleitung (112) einschließt, das innerhalb der Zweigmischkammer (116) angeordnet ist;
das distale Ende (250) der ersten Einlassleitung (112) von einem Abschnitt der zweiten Einlassleitung (114) umgeben ist.

8. Luftstrommischverteiler (100) nach Anspruch 7, wobei der erste Mischzuleitungszweig (110a) eine Strom-Zwischenanordnungsdüse (252) einschließt, die am distalen Ende (250) der ersten Einlassleitung (112) innerhalb der Zweigmischkammer (116) montiert ist, und wobei die Strom-Zwischenanordnungsdüse (252) so konfiguriert ist, dass sie Mischen des ersten Luftstroms und des zweiten Luftstroms erleichtert, bevor der erste Luftstroms und der zweite Luftstrom in den Behälter (104) eintreten.

9. Luftstrommischverteiler (100) nach Anspruch 7 oder Anspruch 8, wobei der Luftstrommischverteiler (100) einen zweiten Mischzuleitungszweig (110b) des mindestens einen Mischzuleitungszweigs (110) einschließt, wobei der erste Mischzuleitungszweig (110a) mit einer ersten Einlassöffnung mindestens einer Einlassöffnung (202) gekoppelt ist und der zweite Mischzuleitungszweig (110b) mit einer zweiten Einlassöffnung der mindestens einen Einlassöffnung (202) gekoppelt ist, und wobei die erste und zweite Einlassöffnung entlang des Behälters (104) in Umfangsrichtung beabstandet sind und der erste und zweite Mischzuleitungszweig (110a, 110b) unterschiedliche Orientierungen in Bezug auf den Behälter (104) aufweisen, um Umfangszirkulation des Luftstroms innerhalb der Hauptmischkammer (108) in einer gemeinsamen Drehrichtung (124) zu bewirken.

10. Luftstrommischverteiler (100) nach einem vorstehenden Anspruch, weiter umfassend einen Strömungsgleichrichter (270), der innerhalb der sekundären Mischkammer (122) des Turms (106) gelegen ist, wobei der Strömungsgleichrichter so konfiguriert ist, dass er den aus der Hauptmischkammer (108) aufgenommenen Luftstrom zu einem oder mehreren Auslässen (120) umleitet.

11. Flugzeug, das den Luftstrommischverteiler (100) nach einem vorstehenden Anspruch einschließt.

12. Verfahren zur Konditionierung von Luftstrom, wobei das Verfahren Folgendes umfasst:
Mischen eines ersten Luftstroms mit einem zweiten Luftstrom innerhalb eines Mischzuleitungszweigs (110) eines Luftstrommischverteilers (100), um einen gemischten Luftstrom zu bilden, wobei der Mischzuleitungszweig (110) mit einem Behälter (104) des Luftstrommischverteilers (100) gekoppelt ist;
Zuleiten des gemischten Luftstroms in eine Hauptmischkammer (108) des Behälters (104);
Sammeln von Feuchtigkeit aus dem gemischten Luftstrom, die sich an einer inneren Seitenwand (204) des Behälters (104) innerhalb einer Feuchtigkeitsauffangrinne (206) des Behälters (104) ansammelt, wobei sich die Feuchtigkeitsauffangrinne (206) in Umlaufrichtung entlang des Behälters (104) erstreckt; und
Leiten des gemischten Luftstroms stromabwärts von der Hauptmischkammer (108) und der Feuchtigkeitssammelrinne (206) zu einem oder mehreren Auslässen (120) des Luftstrommischverteilers (100) zur Verteilung auf einen oder mehrere klimakontrollierte Räume,
wobei der Luftstrommischverteiler (100) einen Turm (106) einschließt, der an dem Behälter (104) montiert ist und eine sekundäre Mischkammer (122) definiert,
wobei Leiten des gemischten Luftstroms stromabwärts von der Hauptmischkammer (108) und der Feuchtigkeitssammelrinne (206) Leiten des gemischten Luftstroms durch einen Strömungsgleichrichter (270) und in die sekundäre Mischkammer (122) umfasst,
wobei der Turm (106) den einen oder die mehreren Auslässe (120) des Luftstrommischverteilers (100) einschließt,
wobei sowohl der Behälter (104) als auch der Turm (106) zylindrisch sind und der Behälter (104) einen größeren Durchmesser aufweist als der Turm (106), und
wobei die Feuchtigkeitsauffangrinne (206) entlang eines Schulterabschnitts (210) des Behälters (104) gelegen ist, der radial über den Turm (106) vorsteht.

13. Verfahren nach Anspruch 12, weiter umfassend:
Leiten des ersten Luftstroms aus dem einen oder den mehreren klimakontrollierten Räumen zu einer ersten Einlassleitung (112) des Mischzuleitungszweigs (110); und
Leiten des zweiten Luftstroms aus einem Klimatisierungssystem zu einer zweiten Einlassleitung (114) des Mischzuleitungszweigs (110).

14. Verfahren nach Anspruch 12 oder 13, wobei die Feuchtigkeitssammelrinne (206) eine Ablaufrinne (222) einschließt, die einen ringförmigen Kanal (224) definiert, und das Verfahren weiter Ablassen der Feuchtigkeit aus dem Luftstrommischverteiler (100) über einen oder mehreren Ablassanschlüsse der Ablaufrinne (222) umfasst.

15. Verfahren nach einem der Ansprüche 12 bis 14, weiter umfassend Einbauen des Luftstrommischverteilers (100) in ein Flugzeug.

## Revendications

1. Collecteur de mélange à écoulement d'air (100), comprenant :
une boîte (104) comprenant une paroi latérale intérieure (204) qui définit une chambre de mélange principale (108), dans lequel la boîte (104) définit au moins une ouverture d'entrée (202) à travers la paroi latérale intérieure (204) pour recevoir un écoulement d'air dans la chambre de mélange principale (108), dans lequel la boîte (104) inclut une gouttière de collecte d'humidité (206) qui est ouverte sur la chambre de mélange principale (108) et configurée pour collecter de l'humidité à partir de l'écoulement d'air qui se condense sur la paroi latérale intérieure (204), et dans lequel la gouttière de collecte d'humidité (206) s'étend circonférentiellement le long de la boîte (104) ; et
une tour (106) s'étendant à partir de la boîte (104), dans lequel la tour (106) définit une chambre de mélange secondaire (122) et inclut une ou plusieurs sorties (120), dans lequel la chambre de mélange secondaire (122) est configurée pour recevoir l'écoulement d'air en aval de la boîte (104) et pour diriger l'écoulement d'air vers les une ou plusieurs sorties (120),
dans lequel la boîte (104) et la tour (106) sont toutes deux cylindriques, et la boîte (104) présente un diamètre plus grand que la tour (106), et
dans lequel la gouttière de collecte d'humidité (206) est située le long d'une section d'épaulement (210) de la boîte (104) qui fait saillie radialement au-delà de la tour (106).

2. Collecteur de mélange à écoulement d'air (100) selon la revendication 1, dans lequel la gouttière de collecte d'humidité (206) est située à une extrémité de la boîte (104) selon une direction aval (124).

3. Collecteur de mélange à écoulement d'air (100) selon la revendication 1 ou 2, dans lequel la boîte (104) est cylindrique et la gouttière de collecte d'humidité (206) inclut une paroi de gouttière incurvée (220) qui définit un renflement annulaire (214) le long de la boîte (104).

4. Collecteur de mélange à écoulement d'air (100) selon une quelconque revendication précédente, dans lequel :
la gouttière de collecte d'humidité (206) inclut un dalot traversant (222) qui définit un canal annulaire (224), et dans lequel le canal annulaire (224) est configuré pour recevoir de l'humidité provenant de l'écoulement d'air et pour évacuer l'humidité à l'extérieur de la boîte (104) et de la tour (106).

5. Collecteur de mélange à écoulement d'air (100) selon la revendication 4, dans lequel la gouttière de collecte d'humidité (206) inclut une paroi de gouttière (220) et une lame de dalot (232) montée sur la paroi de gouttière (220), dans lequel la lame de dalot (232) définit une bride (234) qui s'étend vers le canal annulaire (224), et dans lequel la bride (234) est configurée pour acheminer de l'humidité provenant de l'écoulement d'air qui se rassemble sur la paroi de gouttière (220) et la lame de dalot (232) à partir d'un bord (238) de la bride (234) jusque dans le canal annulaire (224).

6. Collecteur de mélange à écoulement d'air (100) selon une quelconque revendication précédente, comprenant en outre une bande chauffante (242) montée sur la gouttière de collecte d'humidité (206), dans lequel la bande chauffante (242) est configurée pour chauffer la gouttière de collecte d'humidité (206) afin d'empêcher le gel de l'humidité le long d'une ou plusieurs surfaces de la gouttière de collecte d'humidité (206).

7. Collecteur de mélange à écoulement d'air (100) selon une quelconque revendication précédente, comprenant en outre :
au moins une branche d'alimentation de mélange (110) couplée à la au moins une ouverture d'entrée (202), et dans lequel une première branche d'alimentation de mélange (110a) de la au moins une branche d'alimentation de mélange (110) inclut un premier conduit d'admission (112) qui transporte un premier écoulement d'air ;
un second conduit d'admission (114) qui achemine un second écoulement d'air ; et
un segment fusionné (118) qui définit une chambre de mélange de branche (116) ; et dans lequel :
le segment fusionné (118) inclut une extrémité distale (250) du premier conduit d'admission (112) disposée dans la chambre de mélange de la branche (116) ;
l'extrémité distale (250) du premier conduit d'admission (112) est entourée par une partie du second conduit d'admission (114).

8. Collecteur de mélange à écoulement d'air (100) selon la revendication 7, dans lequel la première branche d'alimentation de mélange (110a) inclut une buse d'intercalage d'écoulement (252) montée sur l'extrémité distale (250) du premier conduit d'admission (112) à l'intérieur de la chambre de mélange de branche (116), et la buse d'intercalage d'écoulement (252) est configurée pour faciliter le mélange du premier écoulement d'air et du second écoulement d'air avant que les premier et second écoulements d'air n'entrent dans la boîte (104).

9. Collecteur de mélange à écoulement d'air (100) selon la revendication 7 ou 8, dans lequel le collecteur de mélange à écoulement d'air (100) inclut une seconde branche d'alimentation de mélange (110b) de la au moins une branche d'alimentation de mélange (110), dans lequel la première branche d'alimentation de mélange (110a) est couplée à une première ouverture d'entrée d'au moins une ouvertures d'entrée (202), et la seconde branche d'alimentation de mélange (110b) est couplée à une seconde ouverture d'entrée de la au moins une ouverture d'entrée (202), et dans lequel les première et seconde ouvertures d'entrée sont espacées circonférentiellement le long de la boîte (104) et les première et seconde branches d'alimentation de mélange (110a, 110b) présentent des orientations différentes par rapport à la boîte (104) pour provoquer une circulation circonférentielle de l'écoulement d'air dans la chambre de mélange principale (108) dans une direction de rotation commune (124).

10. Collecteur de mélange à écoulement d'air (100) selon une quelconque revendication précédente, comprenant en outre un redresseur d'écoulement (270) situé dans la chambre de mélange secondaire (122) de la tour (106), dans lequel le redresseur d'écoulement est configuré pour rediriger l'écoulement d'air reçu depuis la chambre de mélange principale (108) vers une ou plusieurs sorties (120).

11. Aéronef incluant le collecteur de mélange à écoulement d'air (100) selon une quelconque revendication précédente.

12. Procédé de conditionnement d'un écoulement d'air, le procédé comprenant :
le mélange d'un premier écoulement d'air avec un second écoulement d'air dans une branche d'alimentation de mélange (110) d'un collecteur de mélange à écoulement d'air (100) pour former un écoulement d'air mixte, dans lequel la branche d'alimentation de mélange (110) est couplée à une boîte (104) du collecteur de mélange à écoulement d'air (100) ;
l'alimentation de l'écoulement d'air mixte dans une chambre de mélange principale (108) de la boîte (104) ;
la collecte d'humidité à partir de l'écoulement d'air mixte qui se condense sur une paroi latérale intérieure (204) de la boîte (104) à l'intérieur d'une gouttière de collecte d'humidité (206) de la boîte (104), dans lequel la gouttière (206) s'étend circonférentiellement le long de la boîte (104) ; et
la direction de l'écoulement d'air mixte en aval de la chambre de mélange principale (108) et de la gouttière de collecte d'humidité (206) vers une ou plusieurs sorties (120) du collecteur de mélange à écoulement d'air (100) pour distribution vers un ou plusieurs espaces climatisés,
dans lequel le collecteur de mélange à écoulement d'air (100) inclut une tour (106) qui est montée sur la boîte (104) et définit une chambre de mélange secondaire (122),
dans lequel ladite direction de l'écoulement d'air mixte en aval de la chambre de mélange principale (108) et de la gouttière de collecte d'humidité (206) comprend la direction l'écoulement d'air mixte à travers un redresseur d'écoulement (270) et jusque dans la chambre de mélange secondaire (122),
dans lequel la tour (106) inclut les une ou plusieurs sorties (120) du collecteur de mélange à écoulement d'air (100),
dans lequel la boîte (104) et la tour (106) sont toutes deux cylindriques, et la boîte (104) présente un diamètre plus grand que la tour (106), et
dans lequel la gouttière de collecte d'humidité (206) est située le long d'une section d'épaulement (210) de la boîte (104) qui fait saillie radialement au-delà de la tour (106).

13. Procédé selon la revendication 12, comprenant en outre :
la direction du premier écoulement d'air depuis les un ou plusieurs espaces climatisés vers un premier conduit d'admission (112) de la branche d'alimentation de mélange (110) ; et
la direction du second écoulement d'air depuis un système de climatisation vers un second conduit d'admission (114) de la branche d'alimentation de mélange (110).

14. Procédé selon la revendication 12 ou 13, dans lequel la gouttière de collecte d'humidité (206) inclut un dalot traversant (222) qui définit un canal annulaire (224), et le procédé comprend en outre le drainage de l'humidité à partir du collecteur de mélange à écoulement d'air (100) via un ou plusieurs orifices de drainage du dalot traversant (222).

15. Procédé selon l'une quelconque des revendications 12 à 14, comprenant en outre l'installation du collecteur de mélange à écoulement d'air (100) à l'intérieur d'un aéronef.
